# EUROPEAN PATENT APPLICATION

(11) **EP 4 811 917 A1**
(43) Date of publication of application: **23.09.2026**
(21) Application number: 24891775.9
(22) Date of filing: 14.11.2024
(51) Int. Cl.: H04W 74/06, H04W 74/00, H04W 74/0816, H04L 1/1607, H04W 84/12

(54) **METHOD AND APPARATUS FOR SHARING DYNAMIC TRANSMISSION OPPORTUNITY IN WIRELESS LAN SYSTEM**

(30) Priority: 14.11.2023 US 202363548396 P
(71) Applicant: LG Electronics Inc., Yeongdeungpo-gu Seoul 07336 (KR)
(72) Inventor: KIM, Sang Gook, San Diego, California 92131 (US); CHOI, Jinsoo, Seoul 06772 (KR); JANG, Insun, Seoul 06772 (KR)
(74) Representative: Jung, Minkyu
(86) International application number: PCT/KR2024/017962
(87) International publication number: WO 2025/105829

(57) **Abstract**

Disclosed are a method and an apparatus for dynamically sharing a transmission opportunity (TXOP) in a wireless LAN system. The method according to an embodiment of the present disclosure may comprise the steps of: a first station (STA) transmitting, to a second STA within a transmission opportunity (TXOP) duration of the second STA, a first frame including information indicating the presence of traffic to be transmitted from the first STA; and after transmitting the first frame, the first STA transmitting a second frame including the traffic to the second STA.

## Description

### [TECHNICAL FIELD]

The present disclosure relates to a method and an apparatus for dynamically sharing a transmission opportunity (TXOP) in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies

### [Disclosure]

### [Technical Problem]

A technical object of the present disclosure is to provide a method and an apparatus for sharing a dynamic transmission opportunity (TXOP).

An additional technical object of the present disclosure is to provide a method and an apparatus for transmitting or receiving information for sharing a TXOP by a TXOP holder.

An additional technical object of the present disclosure is to provide a method and an apparatus for transmitting or receiving information for being shared with a TXOP from a TXOP holder.

An additional technical object of the present disclosure is to provide a method and an apparatus for transmitting or receiving information for TXOP recovery after TXOP sharing.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may comprise transmitting, by a first station (STA) to a second STA, within a transmission opportunity (TXOP) duration of the second STA, a first frame including information indicating the presence of traffic to be transmitted from the first STA; and after transmitting the first frame, transmitting, by the first STA to the second STA, a second frame including the traffic.

A method according to an additional aspect of the present disclosure may comprise receiving, by a second station (STA) from a first STA, within a transmission opportunity (TXOP) duration of the second STA, a first frame including information indicating the presence of traffic to be transmitted from the first STA; and after receiving the first frame, receiving, by the second STA from the first STA, a second frame including the traffic.

### [Technical Effects]

According to the present disclosure, a method and an apparatus for sharing a dynamic transmission opportunity (TXOP) may be provided.

According to the present disclosure, a method and an apparatus for transmitting or receiving information for sharing a TXOP by a TXOP holder may be provided.

According to the present disclosure, a method and an apparatus for transmitting or receiving information for being shared with a TXOP from a TXOP holder may be provided.

According to the present disclosure, a method and an apparatus for transmitting or receiving information for TXOP recovery after TXOP sharing may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied.
FIG. 9 represents examples of a topology of low-latency communication to which the present disclosure may be applied.
FIG. 10 is a diagram for describing an example of an operation of a first STA according to the present disclosure.
FIG. 11 is a diagram for describing an example of an operation of a second STA according to the present disclosure.
FIG. 12 is a diagram for representing examples of TXOP sharing indication according to the present disclosure.
FIG. 13 is a diagram for representing an exemplary format of a BA frame to which the present disclosure may be applied.
FIG. 14 is a diagram representing examples of a transmission operation through TXOP sharing according to the present disclosure.
FIG. 15 is a diagram representing examples of TXOP sharing recovery according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

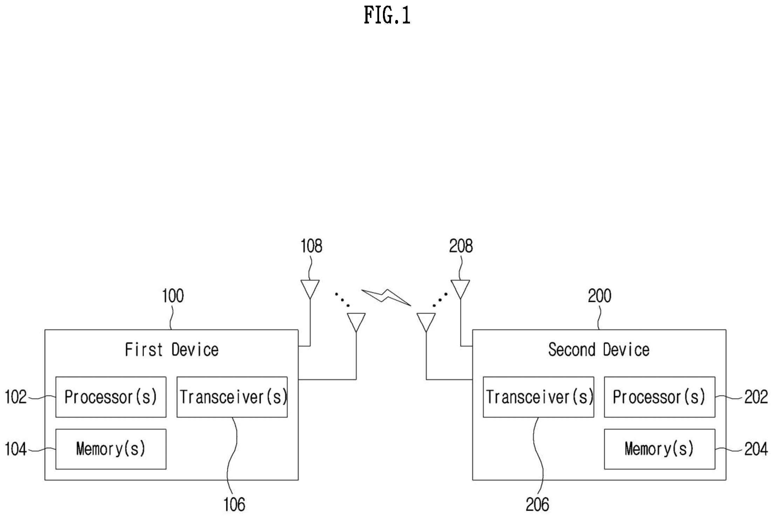

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

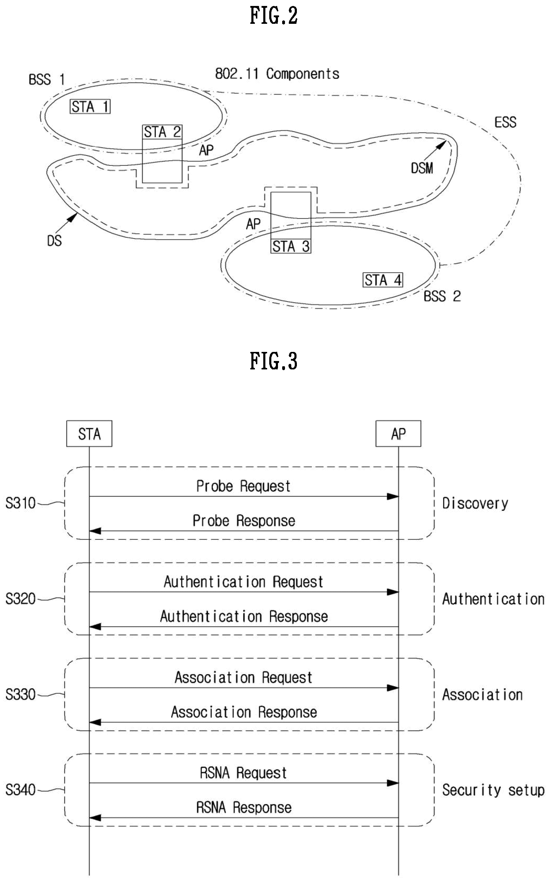

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

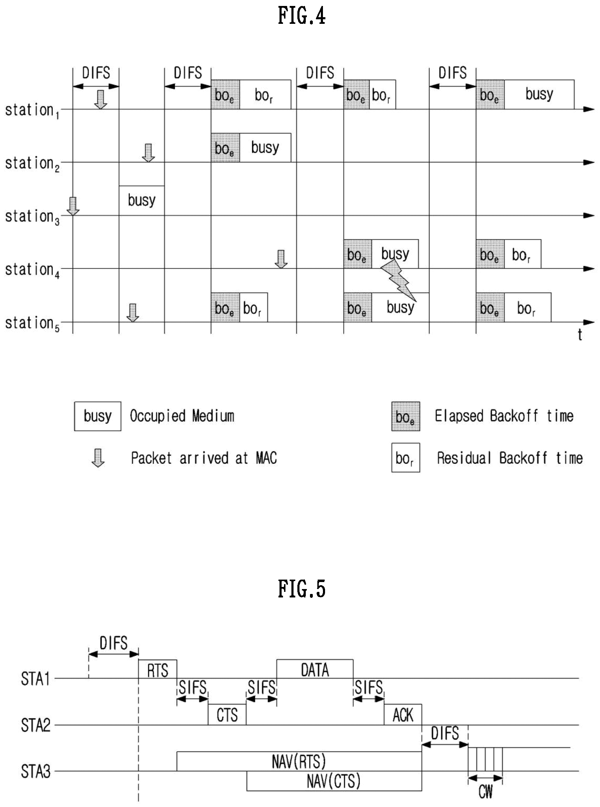

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2n-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

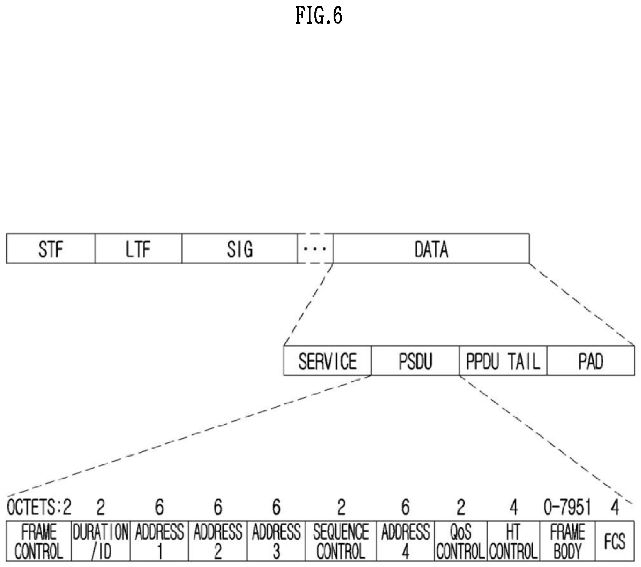

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

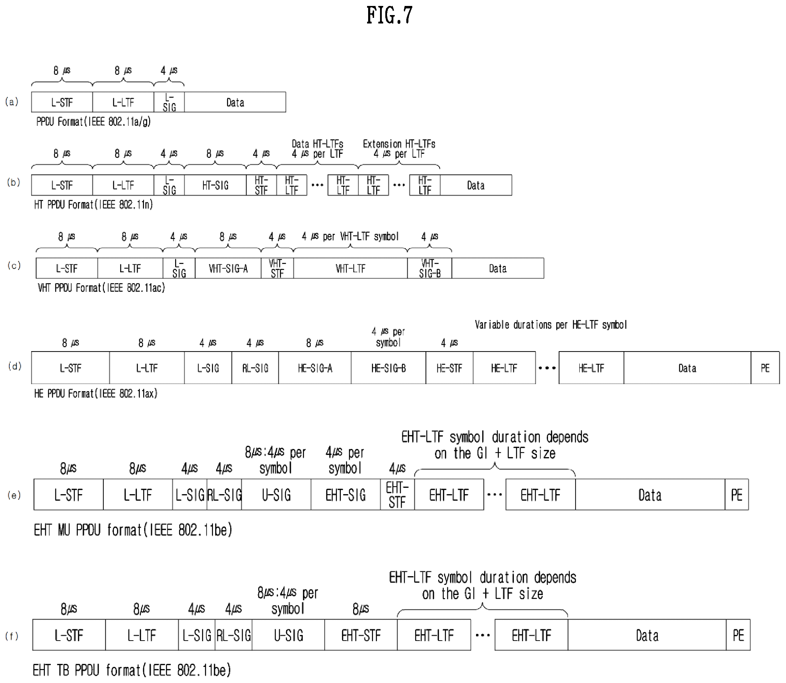

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996-tone+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

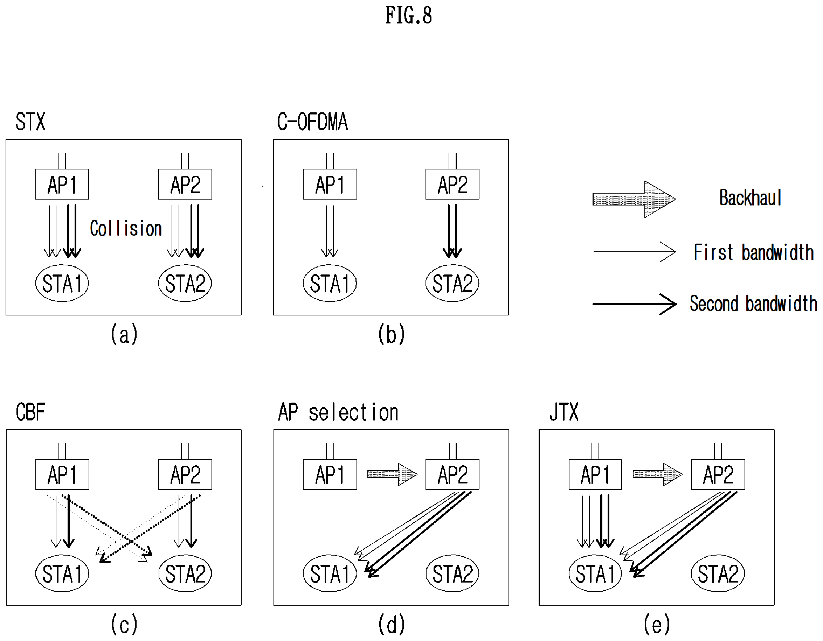

FIG. 8 is a diagram for describing various transmission or reception techniques in a MAP environment to which the present disclosure may be applied.

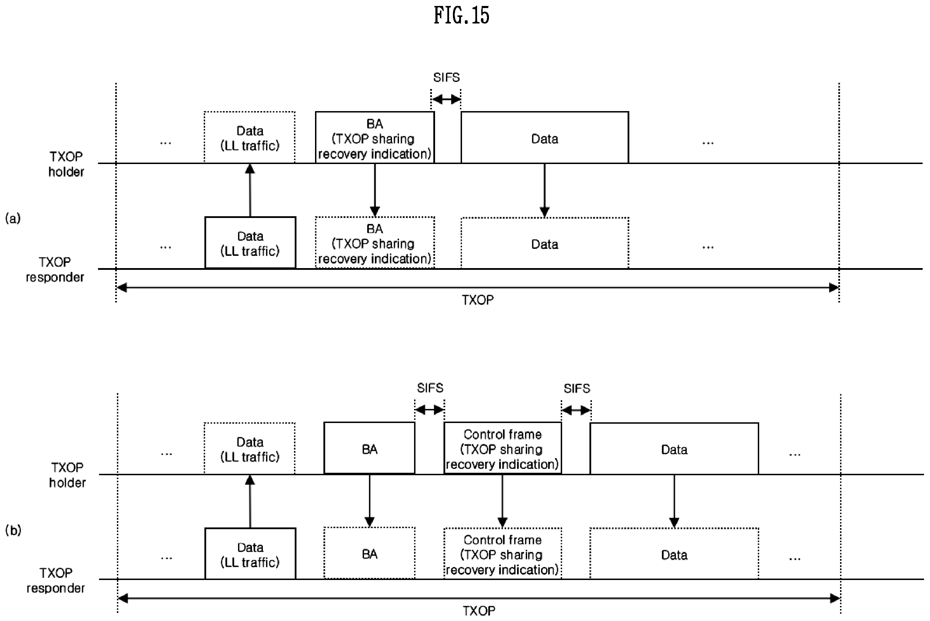

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 15(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

In the examples of the present disclosure, it is assumed that a multi-AP operation is performed as follows.

Step 1: Distribute a resource region to each AP through a trigger frame from a master AP (i.e., an AP-to-AP trigger frame, or a master trigger frame)

Step 2: Each AP performs DL (i.e., from an AP to a STA) data transmission in a resource region distributed to it, or transmits a trigger frame (i.e., an AP-to-STA trigger frame) for UL (i.e., from a STA to an AP) data transmission in a resource region distributed to it.

Step 3: A STA transmits a response to DL data, or transmits through UL data (e.g., a TB PPDU).

When a resource distributed between APs is a frequency resource, it may correspond to a C-OFDMA method, when it is a time resource, it may correspond to a C-TDMA technique and when it is a spatial resource (or beam), it may correspond to a CBF method. In examples described below, it is described representatively by assuming that a C-OFDMA technique, i.e., a multi-AP operation through a resource distinguished in a frequency domain, is performed. However, a scope of the present disclosure is not limited thereto, and may additionally or alternatively include a multi-AP operation through a resource distinguished in another domain (e.g., a time domain and/or a space domain).

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links. A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD refers to a device which has at least one affiliated STA as a logical entity and has a single MAC service access point (SAP) for one MAC data service and logical link control (LLC). A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

### Dynamic TXOP sharing

Due to wide bandwidth allocation and development of transmission technologies according thereto, support for services/applications requiring low-latency or low latency (LL) communication is becoming widespread. For example, in order to support augmented reality using an eXtended Reality (XR) device, low-latency communication may be required. In addition, considering the characteristics of interactive low-latency communication, support for bidirectional data transmission and reception rather than unidirectional data transmission and reception is required.

A TXOP is defined as a scheme for guaranteeing data transmission by a TXOP holder for a predetermined time. A conventional TXOP may basically be used for unidirectional data transmission and reception (e.g., data transmission from a TXOP holder to a TXOP responder). When a TXOP holder may share (e.g., TXOP sharing), particularly dynamically share, a channel with a device performing low-latency communication during a TXOP (or during a TXOP duration), bidirectional low-latency services/applications may be supported more effectively.

A conventional TXOP sharing scheme (e.g., a triggered TXOP sharing procedure) may support data transmission from a TXOP responder to a TXOP holder during one time period partially allocated within a TXOP duration, but a scheme in which the TXOP responder dynamically requests TXOP sharing or the TXOP holder dynamically recovers a shared TXOP is not provided. Therefore, there is a need for a specific scheme for dynamically sharing a TXOP, that is, for improving the conventional TXOP sharing operation to support a case in which traffic to be transmitted by the TXOP responder has a low-latency characteristic and/or to support bidirectional low-latency traffic transmission and reception.

Various examples of the present disclosure for an efficient dynamic TXOP sharing scheme will be described below.

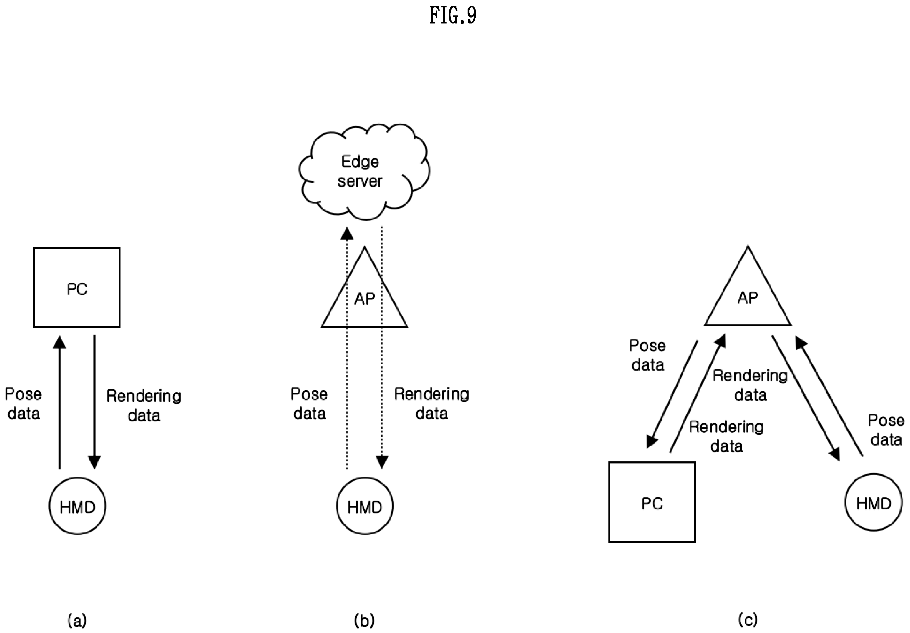

FIG. 9 represents examples of a topology of low-latency communication to which the present disclosure may be applied.

In the example of FIG. 9, as an example of low-latency communication, it is assumed that rendering data is provided to a head mounted display (HMD) from a main device (e.g., a personal computer (PC) or a server) transmitting rendering data, and pose data of a user is provided to the main device from the HMD, and data exchanged between devices may have a low-latency characteristic. However, the scope of the present disclosure is not limited to these examples of devices and/or data, and may be applied to various devices and/or data for supporting various bidirectional low-latency communications.

FIG. 9(a) represents an exemplary topology in which rendering data is provided to an HMD from a PC, wherein the PC is a main device, and pose data is provided to the main device from the HMD. The PC and the HMD may each correspond to a non-AP STA, and may perform direct communication.

FIG. 9(b) represents an exemplary topology in which rendering data is delivered to an HMD from an edge server, wherein the edge server is a main device, through an AP, and pose data is provided to the main device from the HMD through the AP. The HMD may correspond to a non-AP STA, and may perform direct communication with the AP. Communication between the main device and the HMD may be performed through (via) the AP.

FIG. 9(c) represents an exemplary topology in which rendering data is delivered to an HMD from a PC, wherein the PC is a main device, through an AP, and pose data is provided to the main device from the HMD through the AP. The PC and the HMD may each correspond to a non-AP STA, and communication therebetween may be performed through (via) the AP. The PC and the AP may perform direct communication, and the HMD and the AP may perform direct communication.

In the examples described below, a TXOP holder may correspond to a PC of FIG. 9(a), an AP of FIG. 9(b), and a PC of FIG. 9(c), and a TXOP responder may correspond to an HMD of FIG. 9(a), an HMD of FIG. 9(b), and an HMD of FIG. 9(c). In this case, in the case of FIG. 9(c), communication between the TXOP holder and the TXOP responder may be performed through (or via) an AP, and in the examples described below, communication between the TXOP holder and the TXOP responder may be applied to direct communication not via an AP, and may also be applied to communication via an AP.

In the present disclosure, for convenience of description, it is described by assuming the topology of FIG. 9(c), but the scope of the present disclosure may be applied to other topologies illustrated in FIG. 9, and may also be applied to various other WLAN-based topologies.

Various examples of dynamic TXOP sharing of the present disclosure may be applied to multi-link (ML) and/or multi-AP (MAP) operations. For example, for ML, link information to which dynamic TXOP sharing according to the present disclosure is applied may be transmitted and received between a TXOP holder and a TXOP responder. Additionally or alternatively, for example, for MAP, in addition to dynamic TXOP sharing between APs, TXOP sharing within each AP (e.g., between one AP and a STA associated with the corresponding AP), that is, hierarchical TXOP sharing, may be applied.

In the present disclosure, for convenience of description, it is described by assuming a single link and single AP environment, but the scope of the present disclosure may also be extended and applied to ML operations and/or MAP operations.

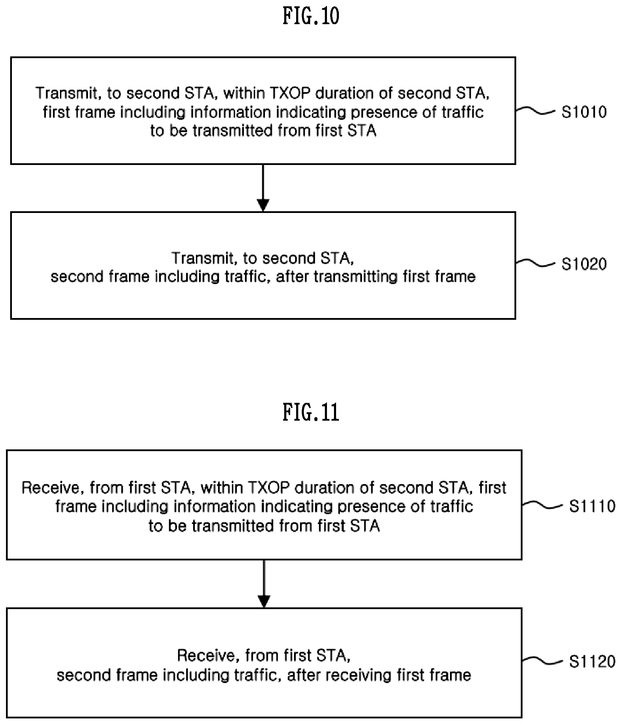

FIG. 10 is a diagram for describing an example of an operation of a first STA according to the present disclosure.

In step S1010, a first STA may transmit, to a second STA, within a TXOP duration of the second STA, a first frame including information indicating the presence of traffic to be transmitted from the first STA.

For example, the first frame may correspond to a response to a frame from the second STA within the TXOP duration. For example, a frame from the second STA may be a frame including data (e.g., rendering data) transmitted from the second STA to the first STA within a TXOP. The response thereto may correspond to a block ACK (BA) frame. In this case, information indicating the presence of traffic (e.g., low-latency traffic such as pose data) to be transmitted from the first STA may be included in the block ACK frame.

Additionally or alternatively, the first frame may further include information on the number of transmissions (or the number of sharings) related to the traffic to be transmitted by the first STA (e.g., required for low-latency traffic transmission).

Before transmitting the first frame in step S1010, TXOP sharing indication information may be received by the first STA from the second STA. For example, TXOP sharing indication information may be included in a multi-user request to send TXOP sharing (MU-RTS TXS) frame or a control frame. For example, a response to TXOP sharing indication information may correspond to a clear to send (CTS) frame or an ACK frame. For example, a frame including TXOP sharing indication information may include information on at least one of the number of transmissions for which TXOP sharing is allowed (or the number of allowed sharing), a maximum number of transmissions (or a maximum number of sharings), a minimum number of transmissions (or a minimum number of sharings), a transmission time length (or a sharing time length), or a time length per transmission (or a time length per sharing).

In step S1020, after transmitting the first frame, the first STA may transmit, to the second STA, a second frame including the traffic.

For example, the second frame may be transmitted after a predetermined time from transmission of the first frame (i.e., without transmission or reception of another frame between the first frame and the second frame). Alternatively, the second frame may be transmitted based on a trigger frame received from the second STA after transmitting the first frame.

After transmitting the second frame in step S1020, a third frame including TXOP sharing recovery indication information may be transmitted from the second STA to the first STA. After a predetermined time after receiving the third frame, data (e.g., rendering data) from the second STA to the first STA may be transmitted. For example, the third frame may correspond to a response frame (e.g., a block ACK frame) to the second frame, or may correspond to a frame (e.g., a control frame) additionally transmitted to the response frame to the second frame.

In the example of FIG. 10, the first STA may correspond to a TXOP responder. The second STA may correspond to a TXOP holder. The first STA may be a non-AP STA or an AP STA. The second STA may be an AP STA or a non-AP STA.

The example of FIG. 10 may also be applied to various topologies depicted in FIG. 9. For example, frame exchange between the first STA and the second STA may be directly performed between the first STA that is a non-access point (non-AP) STA and the second STA that is a non-AP STA (FIG. 9(a)), may be directly performed between the first STA that is a non-AP STA and the second STA that is an AP STA (FIG. 9(b)), or may be performed through an AP between the first STA that is a non-AP STA and the second STA that is a non-AP STA (FIG. 9(c)).

The method described in the example of FIG. 10 may be performed by the first device (100) of FIG. 1. For example, at least one processor (102) of the first device (100) of FIG. 1 may be configured to transmit, through the at least one transceiver, to a second STA, within a transmission TXOP duration of the second STA, a first frame including information indicating the presence of traffic to be transmitted from the first STA; and after transmitting the first frame, transmit, through the at least one transceiver, to the second STA, a second frame including the traffic. Furthermore, at least one memory (104) of the first device (100) may store instructions for performing the method described in the example of FIG. 10 or examples described below when executed by at least one processor (102).

FIG. 11 is a diagram for describing an example of an operation of a second STA according to the present disclosure.

In step S1110, a second STA may receive, from a first STA, within a TXOP duration of the second STA, a first frame including information indicating the presence of traffic to be transmitted from the first STA

In step S1120, after receiving the first frame, the second STA may receive, from the first STA, a second frame including the traffic.

Since a detailed description of the first frame, the second frame, and frames transmitted and received before or after them in the example of FIG. 11 is the same as that of the example of FIG. 10, repeated descriptions are omitted.

The method described in the example of FIG. 11 may be performed by the second device (200) of FIG. 1. For example, at least one processor (202) of the second device (200) of FIG. 1 may be configured to receive, through the at least one transceiver, from a first STA, within a TXOP duration of a second STA, a first frame including information indicating the presence of traffic to be transmitted from the first STA; and after receiving the first frame, receive, through the at least one transceiver, from the first STA, a second frame including the traffic. Furthermore, at least one memory (204) of the second device (200) may store instructions for performing the method described in the example of FIG. 11 or examples described below when executed by at least one processor (202).

The examples of FIG. 10 and FIG. 11 may correspond to some of the various examples of the present disclosure. Hereinafter, various examples of the present disclosure including the examples of FIG. 10 and FIG. 11 will be described in more detail.

In the embodiments described below, it is described by assuming that topology, a single-link, and a single-AP of FIG. 9(c), but the embodiments described below may be equally applied to various other topologies, multi-link, and/or multi-AP.

In the embodiments described below, dynamic TXOP sharing may be simply referred to as TXOP sharing. That is, since a TXOP sharing procedure including TXOP sharing indication, a TXOP sharing request, and/or TXOP sharing recovery, defined in the embodiments for TXOP sharing according to the present disclosure, is not defined in an existing TXOP sharing procedure, a new TXOP sharing procedure including such features may be distinguished from the existing TXOP sharing procedure without being explicitly referred to as a dynamic TXOP sharing procedure.

### Embodiment 1

The present disclosure relates to TXOP sharing indication.

TXOP holder (an AP or a non-AP STA) may deliver indication for TXOP sharing to a TXOP responder, by transmitting a control frame at the start of a TXOP or within a TXOP duration. Indication for TXOP sharing (i.e., TXOP sharing indication information) may correspond to information informing the TXOP responder that the TXOP holder has an intention to share an opportunity for data transmission (or that sharing is allowed) and/or has such capability, during an entire TXOP duration or during a specific time within the TXOP duration.

A control frame including TXOP sharing indication information may be defined by using an existing frame, or may be defined as a new frame. When using an existing frame, a new sharing mode corresponding to indication for TXOP sharing may be defined.

For example, an MU-RTS TXS frame may be used for TXOP sharing indication. In this case, by defining a new sharing mode distinguished from an existing TXS mode, it may be indicated that an opportunity for data transmission is shared during an entire TXOP or during a specific time within a TXOP.

For example, exchange of an RTS frame and a CTS frame may be used for TXOP sharing indication. In this case, by using reserved bit(s) of the RTS frame and/or the CTS frame, it may be indicated that an opportunity for data transmission is shared during an entire TXOP or during a specific time within a TXOP.

For example, a control frame defined as a new frame may be used for TXOP sharing indication. In this case, the new frame may include information on initiation of a TXOP and TXOP sharing.

Additional information may be included in a control frame delivering TXOP sharing indication information. For example, the additional information may include information on at least one of the number of transmissions for which TXOP sharing is allowed (or the number of allowed sharing), a maximum number of transmissions (or a maximum number of sharings), a minimum number of transmissions (or a minimum number of sharings), a transmission time length (or a sharing time length), or a time length per transmission (or a time length per sharing).

For example, the number of TXOP sharings may be counted as the number of times that a TXOP holder releases/recovers data transmission of a TXOP responder. For example, during one sharing, the TXOP responder may perform only one transmission (e.g., transmission of one frame or one PPDU), or may perform a plurality of transmissions (e.g., transmission of a plurality of frames or a plurality of PPDUs).

The number of TXOP sharings may be indicated as a minimum number and/or a maximum number. For example, it may be informed that a TXOP holder may provide, to a TXOP responder, an opportunity for data transmission at least 30 times within a TXOP for 3 ms. Accordingly, transmission may be performed as many times as needed by the TXOP responder within an allowed range.

A length of a time period shareable during the TXOP may be indicated together with information on the number of TXOP sharings or instead thereof. For example, when indicated together with information on the number of TXOP sharings, information on an entire time length corresponding to the total number of sharings and/or a time length corresponding to one sharing may be indicated.

A frame including the TXOP sharing indication information and/or the additional information as described above may be addressed to a specific device (e.g. a specific TXOP responder).

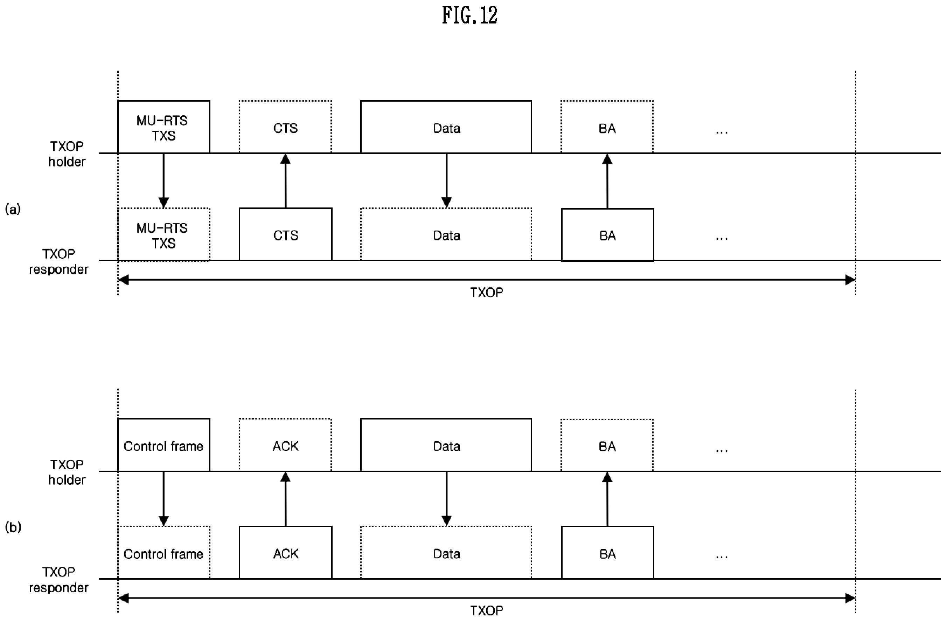

FIG. 12 is a diagram for representing examples of TXOP sharing indication according to the present disclosure.

In the example of FIG. 12, frame exchange between a TXOP holder and a TXOP responder may be performed directly, or may be performed through another entity (e.g., through a relay function of an AP).

In the example of FIG. 12(a), TXOP sharing indication information may be provided from a TXOP holder to a TXOP responder through an MU-RTS TXS frame. In response to this, the TXOP responder may transmit a CTS frame to the TXOP holder. Within a TXOP duration, the TXOP holder may transmit data (e.g., rendering data from the PC/server to the HMD of FIG. 9) to the TXOP responder, and in response to this, the TXOP responder may transmit a block ACK (BA) frame to the TXOP holder.

In the example of FIG. 12(b), TXOP sharing indication information may be provided from a TXOP holder to a TXOP responder through a control frame (e.g., a control frame newly defined in relation to a TXOP sharing procedure). In response to this, the TXOP responder may transmit an ACK frame to the TXOP holder. For example, the ACK frame may correspond to an existing frame (e.g., a CTS frame), or may correspond to another frame including ACK information. Subsequent data transmission/reception and BA frame transmission/reception are the same as the example of FIG. 12(a).

In examples of FIG. 12, data transmitted from the TXOP holder corresponds to data (e.g., rendering data) transmitted within a general TXOP, and an operation in which the TXOP responder transmits traffic (e.g., LL traffic such as pose data) through a TXOP sharing procedure will be described in the example described below. The example of FIG. 12 mainly represents an operation in which the TXOP holder provides TXOP sharing indication information to the TXOP responder as prior information for TXOP sharing.

### Embodiment 2

The present embodiment relates to a TXOP sharing operation.

For TXOP sharing, a TXOP responder may transmit, to a TXOP holder, information indicating that the TXOP responder has traffic (e.g. LL traffic) to transmit. This may correspond to a TXOP sharing request. Such a TXOP sharing request may be based on TXOP sharing indication information (and additional information) previously provided to the TXOP responder by the TXOP holder.

Information indicating the presence of traffic to be transmitted from the TXOP responder may be transmitted to the TXOP holder in response to data transmission from the TXOP holder.

For example, a BA frame or a Multi-BA frame may be used as a response to data transmission from the TXOP holder. For example, the Multi-BA frame may be a Multi-STA BA frame, a Multi-TID BA frame, or a Multi-Link BA frame, or may be another or new variant of a BA frame. A format of a BA information field of the BA frame may be determined according to the variant. In this case, the TXOP responder may inform the TXOP holder whether LL traffic to be transmitted is present, by using reserved bit(s) of a BA control field or a Multi-BA control field of the BA frame or the Multi-BA frame. Although the description of the embodiment is provided by using the BA frame, examples of the present disclosure may also be applied to the Multi-BA frame.

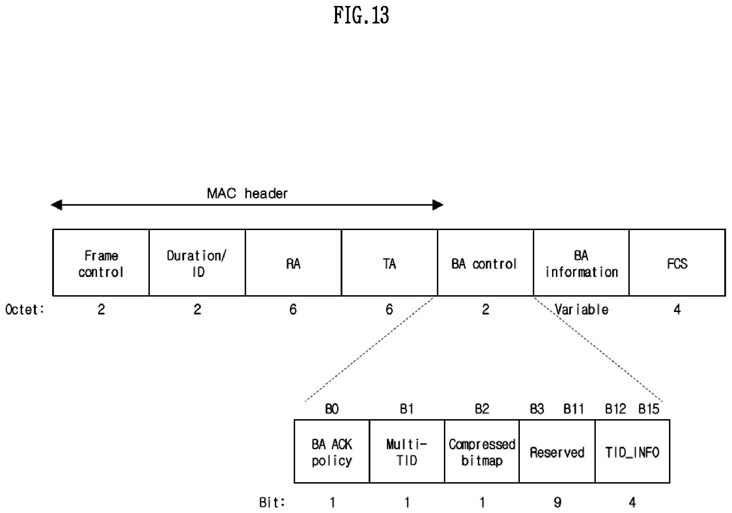

FIG. 13 is a diagram for representing an exemplary format of a BA frame to which the present disclosure may be applied.

A MAC header of a BA frame may include a frame control field (2 octets), a duration/ID field (2 octets), a receiver address (RA) field (6 octets), and a transmitter address (TA) field (6 octets). A frame body of the BA frame may include a BA control field (2 octets), and a BA information field (variable length), and may additionally include a frame check sequence (FCS) field (4 octets).

Bit positions B3-B11 of the BA control field are defined as reserved bits. In addition, a combination of values of a multi traffic ID (TID) subfield at the B1 position and a compressed bitmap subfield at the B2 position is defined as shown in Table 1 below, and among combinations of bit values of 00, 01, 10, and 11, the combination of 10 is defined as a reserved value.

**[Table 1]**

| Multi-TID subfield value | Compressed bitmap subfield value | Block ACK frame variant |
|---|---|---|
| 0 | 0 | Basic block ACK |
| 0 | 1 | Compressed block ACK |
| 1 | 0 | Reserved |
| 1 | 1 | Multi-TID block ACK |

For example, information on whether LL traffic to be transmitted from the TXOP responder is present may be indicated through reserved bits (B3-B11) and/or a reserved value (10) among combinations of values of a multi-TID subfield and a compressed bitmap subfield.

In addition to information indicating the presence of traffic to be transmitted from the TXOP responder, information on the number of transmission related to the traffic to be transmitted may also be indicated from the TXOP responder to the TXOP holder. Information on the number of transmissions may represent how many times transmission of a data frame (or PPDU) is required in order for the TXOP responder to transmit all LL traffic that the TXOP responder intends to transmit.

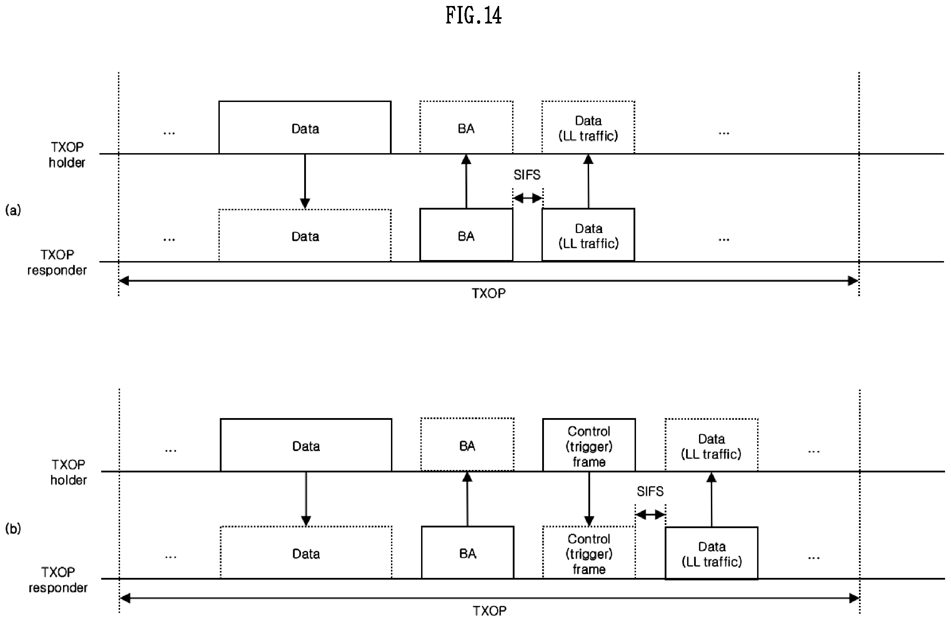

FIG. 14 is a diagram representing examples of a transmission operation through TXOP sharing according to the present disclosure.

In the example of FIG 14, frame exchange of a TXOP holder and a TXOP responder may be performed directly, or may be performed through another entity (e.g., an AP).

In the example of FIG 14(a), the TXOP responder may transmit, to the TXOP holder, a data frame including LL traffic after a predetermined time, after the TXOP responder informs the TXOP holder whether LL traffic is present.

For example, the predetermined time may be SIFS. The SIFS is merely an example, and a predefined IFS of another length may be applied as the predetermined time interval.

For example, parameters required for transmission of a data frame including LL traffic of the TXOP responder may be determined based on information obtained through reception of data from the TXOP holder.

For example, when the TXOP responder indicates, to the TXOP holder through a BA frame, information on the number of transmissions of the LL traffic in addition to an indication of whether LL traffic is present, the TXOP responder may transmit the data frame including the LL traffic the number of times less than or equal to the number of transmissions informed to the TXOP holder.

In the example of FIG. 14(b), after the TXOP responder informs the TXOP holder whether LL traffic is present, the TXOP responder may receive a control frame (e.g., a trigger frame) from the TXOP holder, and may transmit, to the TXOP holder, a data frame including LL traffic based on the corresponding control frame (or trigger frame).

For example, the TXOP responder may transmit, to the TXOP holder, a data frame including LL traffic after a predetermined time (e.g., SIFS), after the TXOP responder receives the control frame (or trigger frame) from the TXOP holder.

For example, through the above-described control frame (or trigger frame), response information to information indicating whether LL traffic is present of the TXOP responder may be transmitted from the TXOP holder to the TXOP responder.

For example, although the TXOP responder requests TXOP sharing for LL traffic transmission (i.e., informs of the presence of LL traffic to be transmitted), the TXOP holder may reject this. In this case, information representing rejection may be transmitted from the TXOP holder to the TXOP responder through a control frame as response information.

Alternatively, the TXOP holder may accept a TXOP sharing request of the TXOP responder. That is, in response to information indicating the presence of LL traffic to be transmitted from the TXOP responder, the TXOP holder may accept transmission of the LL traffic. In this case, the TXOP holder may provide, to the TXOP responder through a control frame (or trigger frame) as response information, information on resource information (e.g., resource unit (RU) allocation information), modulation and coding scheme (MCS), Number of Spatial Streams (Nss), transmission power, etc., required for transmission of a data frame including the LL traffic of the TXOP responder.

Based on such a control frame (or trigger frame), the TXOP responder may transmit, to the TXOP holder, a data frame including the LL traffic through a PPDU in a TB-PPDU format or an SU-PPDU format.

### Embodiment 3

The present embodiment relates to TXOP sharing recovery.

The TXOP holder may recover the authority of transmission again after sharing a TXOP with the TXOP responder (i.e., after accepting/receiving data transmission of the TXOP responder within a TXOP duration).

FIG. 15 is a diagram representing examples of TXOP sharing recovery according to the present disclosure.

In the example of FIG. 15, frame exchange between the TXOP holder and the TXOP responder may be performed directly, or may be performed through another entity (e.g., an AP).

In the example of FIG. 15(a), the TXOP holder may notify the TXOP responder of recovery of transmission authority (i.e., TXOP sharing recovery), by using a BA frame transmitted as a response to a data frame including LL traffic received from the TXOP responder.

For example, a recovery time point of transmission authority may be after a predetermined time (e.g., SIFS) after transmitting a BA frame including an indication of recovery of transmission authority (i.e., an indication of TXOP sharing recovery). For example, the TXOP holder may inform the TXOP responder of recovery of transmission authority (i.e., TXOP sharing recovery) through reserved bit(s) of a BA control field of a BA frame. That is, after a predetermined time after transmitting the BA frame, the TXOP holder may perform/resume data transmission to the TXOP responder. Alternatively, even when a data frame transmitted by the TXOP responder is a last frame, transmission of an indication of TXOP sharing recovery may be initiated by the TXOP holder.

In the example of FIG. 15(b), the TXOP holder may notify the TXOP responder of recovery of transmission authority (i.e., TXOP sharing recovery) through a control frame, after transmitting a BA frame as a response to a data frame including LL traffic received from the TXOP responder. For example, such a control frame may be a CTS-to-Self frame.

For example, a recovery time point of transmission authority may be after a predetermined time (e.g., SIFS) after transmitting a control frame including an indication of recovery of transmission authority (i.e., an indication of TXOP sharing recovery). That is, after a predetermined time after transmitting a control frame, the TXOP holder may perform/resume data transmission to the TXOP responder.

Although not shown in FIG. 15(b), the TXOP responder that receives a control frame including an indication of TXOP sharing recovery may transmit, to the TXOP holder, an ACK frame in response to the corresponding control frame.

In this case, a recovery time point of transmission authority may be after a predetermined time (e.g., SIFS) after the TXOP holder receives, from the TXOP responder, an ACK frame in response to a control frame including an indication of recovery of transmission authority (i.e., an indication of TXOP sharing recovery). That is, after a predetermined time after receiving an ACK frame for a control frame, the TXOP holder may perform/resume data transmission to the TXOP responder.

In the examples of FIG. 15, TXOP sharing recovery using a BA frame or using a control frame may occur even before transmission of data frames from the TXOP responder is completed by the number of transmissions of LL traffic indicated to the TXOP holder by the TXOP responder that has received transmission authority from the TXOP holder. That is, the TXOP holder may indicate TXOP sharing recovery to the TXOP responder even before the TXOP responder transmits all LL traffic.

The TXOP sharing operation according to the examples of the present disclosure may support a flexible and efficient TXOP sharing procedure in which the TXOP holder indicates dynamic TXOP sharing, the TXOP responder dynamically requests TXOP sharing, and the TXOP holder dynamically recovers TXOP sharing again, by overcoming limitations of an existing TXOP sharing procedure. Accordingly, services/applications requiring low-latency communication by a plurality of devices may be effectively supported. In addition, examples of the present disclosure may be applicable to various low-latency communication topologies, and may be applied to an ML operation and/or a MAP operation.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method comprising:
transmitting, by a first station (STA) to a second STA, within a transmission opportunity (TXOP) duration of the second STA, a first frame including information indicating the presence of traffic to be transmitted from the first STA; and
after transmitting the first frame, transmitting, by the first STA to the second STA, a second frame including the traffic.

2. The method of claim 1,
wherein the first frame corresponds to a response to a frame from the second STA within the TXOP duration.

3. The method of claim 2,
wherein a frame from the second STA includes data from the second STA to the first STA.

4. The method of claim 2,
wherein a response to a frame from the second STA corresponds to a block acknowledgement (ACK) frame, and
wherein information indicating the presence of traffic to be transmitted from the first STA is included in the block ACK frame.

5. The method of claim 1,
wherein the second frame is transmitted after a predetermined time from transmission of the first frame, or
wherein the second frame is transmitted based on a trigger frame received from the second STA after transmitting the first frame.

6. The method of claim 1,
wherein the first frame further includes information on the number of transmissions related to the traffic to be transmitted of the first STA.

7. The method of claim 1,
wherein, before transmitting the first frame:
TXOP sharing indication information is received from the second STA; and
a response to the TXOP sharing indication information is transmitted to the second STA.

8. The method of claim 7,
wherein the TXOP sharing indication information is included in a multi-user request to send TXOP sharing (MU-RTS TXS) frame or a control frame, and
wherein a response to the TXOP sharing indication information corresponds to a clear to send (CTS) frame or an ACK frame.

9. The method of claim 7,
wherein a frame including the TXOP sharing indication information further includes information on at least one of the number of allowed transmissions, a maximum number of transmissions, a minimum number of transmissions, a shared time length, or a time length per transmission.

10. The method of claim 1,
wherein, after transmitting the second frame:
a third frame including TXOP sharing recovery indication information is transmitted from the second STA to the first STA; and
data from the second STA to the first STA is transmitted after a predetermined time after receiving the third frame.

11. The method of claim 10,
wherein the third frame corresponds to a response frame to the second frame or a frame additionally transmitted to the response frame.

12. The method of claim 11,
wherein the response frame corresponds to a block ACK frame, and
wherein the additionally transmitted frame corresponds to a control frame.

13. The method of claim 1,
wherein frame exchange between the first STA and the second STA is:
directly performed between the first STA that is a non-access point (non-AP) STA and the second STA that is a non-AP STA;
directly performed between the first STA that is a non-AP STA and the second STA that is an AP STA; or
performed through an AP between the first STA that is a non-AP STA and the second STA that is a non-AP STA.

14. The method of claim 1,
wherein the first STA is a TXOP responder, and the second STA is a TXOP holder.

15. An apparatus comprising:
at least one transceiver; and
at least one processor connected to the at least one transceiver,
wherein the at least one processor is configured to:
transmit, through the at least one transceiver, to a second STA, within a transmission opportunity (TXOP) duration of the second STA, a first frame including information indicating the presence of traffic to be transmitted from the first STA; and
after transmitting the first frame, transmit, through the at least one transceiver, to the second STA, a second frame including the traffic.

16. A method comprising:
receiving, by a second station (STA) from a first STA, within a transmission opportunity (TXOP) duration of the second STA, a first frame including information indicating the presence of traffic to be transmitted from the first STA; and
after receiving the first frame, receiving, by the second STA from the first STA, a second frame including the traffic.

17. An apparatus comprising:
at least one transceiver; and
at least one processor connected to the at least one transceiver,
wherein the at least one processor is configured to:
receive, through the at least one transceiver, from a first station (STA), within a transmission opportunity (TXOP) duration of a second STA, a first frame including information indicating the presence of traffic to be transmitted from the first STA; and
after receiving the first frame, receive, through the at least one transceiver, from the first STA, a second frame including the traffic.

18. A processing unit comprising:
at least one processor; and
at least one computer memory operably connected to the at least one processor, and based on being executed by the at least one processor, storing instructions for performing a method according to any one claim of Claim 1 to Claim 14.

19. At least one non-transitory computer-readable medium storing at least one instruction that controls to perform a method according to any one claim of Claim 1 to Claim 14 by being executed by at least one processor.
